Europäisches Patentamt

European Patent Office

Office européen des brevets

(11) Veröffentlichungsnummer: **0 392 178**
**A1**

(12) # EUROPÄISCHE PATENTANMELDUNG

(21) Anmeldenummer: **90103875.2**

(22) Anmeldetag: **28.02.90**

(51) Int. Cl.5: **B60B 15/26, B60B 11/02, B66D 1/00**

(30) Priorität: **10.04.89 DE 3911647**

(43) Veröffentlichungstag der Anmeldung:
**17.10.90 Patentblatt 90/42**

(84) Benannte Vertragsstaaten:
**AT BE DE DK FR GB IT NL SE**

(71) Anmelder: **PRÄZI - FLACHSTAHL GMBH**
**Industrieweg 1, Postfach 1180**
**D-4416 Everswinkel(DE)**

(72) Erfinder: **Molinaroli, Romano**
**Gutenbergstrasse 2**
**D-4400 Münster(DE)**

(54) **Radnabenverlängerung für die Antriebsachsen von Kraftfahrzeugen.**

(57) Die Erfindung bezieht sich auf eine Radnabenverlängerung für die Antriebsachsen von Kraftfahrzeugen und sieht vor, daß die Verlängerung 9 an ihrem freien Ende als Vielkeilprofil 9″ ausgebildet ist, auf das wechselweise und drehfest die mit einem korrespondierenden Innen-Vielkeilprofil ausgestatteten topfartig ausgebildeten Naben 1′, 2′, 6′ eines Zwillingsrades 1, einer Seiltrommel 6 oder der Anfahrhilfe 2 aufsteckbar sind.

*Fig. 1*

EP 0 392 178 A1

## Radnabenverlängerung für die Antriebsachsen von Kraftfahrzeugen

Die Erfindung bezieht sich auf eine Radnabenverlängerung nach dem Gattungsbegriff des Patentanspruchs 1. Eine entsprechende Ausführung ist aus der US-PS 3 128 128 bekannt. Aufgabe der Erfindung ist es, die Radnabenverlängerung unterschiedlich zur Selbstbergung des Fahrzeuges oder zur Verbesserung von dessen Fahrverhalten auf schwierigem Grund nutzen zu können und ständig unter Einhaltung der amtlichen Vorschriften mit der Fahrzeugachse verbunden zu halten. Die Lösung dieser Aufgabe ist mit dem Wortlaut des kennzeichnenden Teils der Patentansprüche aufgezeigt.

Anhand der Zeichnungen sei die Erfindung beispielhaft erläutert. Es zeigen:

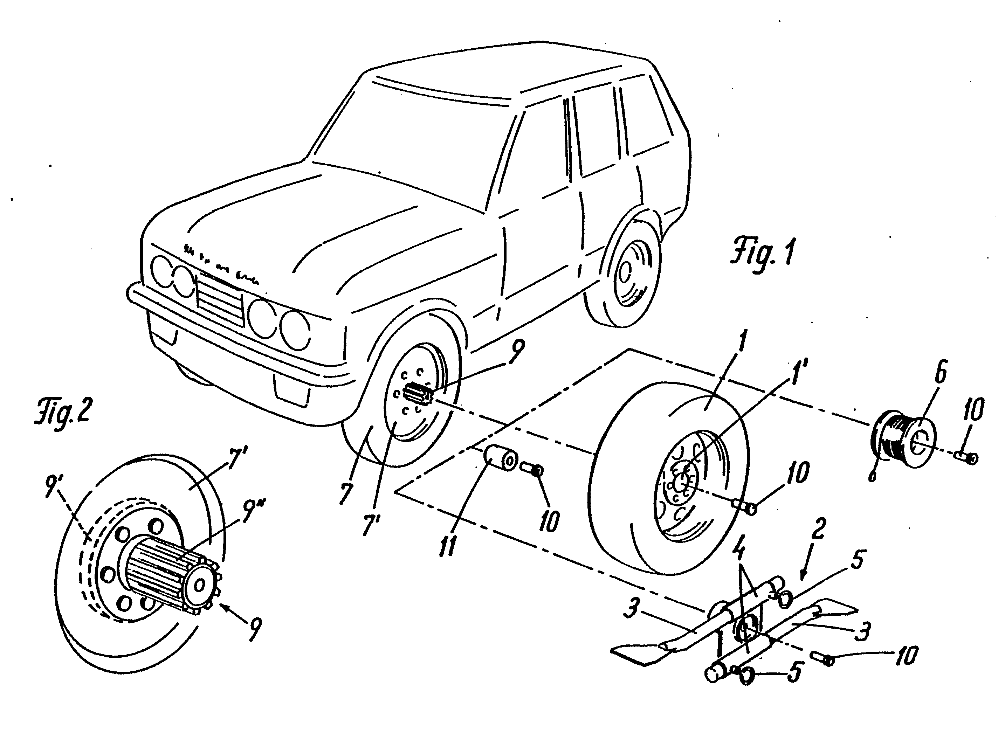

Fig. 1 den Gesamtzusammenhang der Neuheit in Explosivdarstellung,

Fig. 2 die erfindungsgemäße Ausbildung der Radnabenverlängerung,

Fig. 3 ein mit der Radnabenverlängerung verbundenes Zwillingsrad im Schnitt,

Fig. 4 eine mit der Radnabenverlängerung verbundene Anfahrhilfe im Teilschnitt,

Fig. 5 eine mit der Radnabenverlängerung verbundene Seiltrommel im Schnitt.

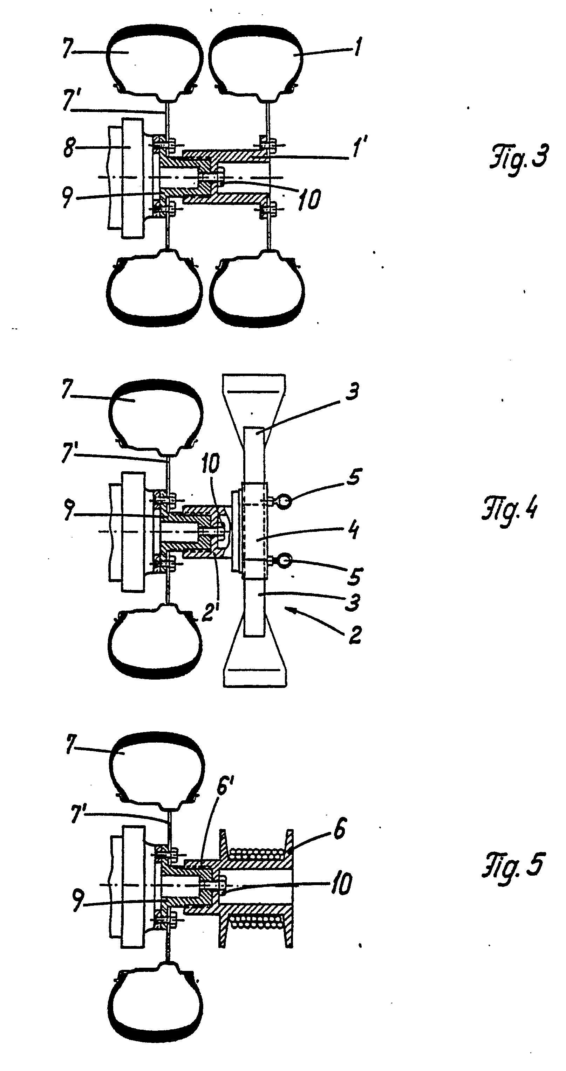

Mit 7 ist das angetrieben Vorderrad eines PKW bezeichnet, dessen Felge das Bezugszeichen 7′ trägt. Mit der Bremstrommel 8 ist die Radnabenverlängerung 9 über deren Flansch 9′ verbunden, wobei das freie Ende der Verlängerung 9 als Vielkeilprofil 9″ ausgebildet ist. Der Flansch 9′ der Radnabenverlängerung 9 wird zwischen der Bremstrommel 8 und der Felge 7 durch die Radbefestigungsschrauben eingeklemmt. Die Radnabenlangerung 9 kann dadurch auch im normalen Straßenverkehr montiert bleiben, ohne daß amtliche Sicherheitsvorschriften verletzt würden. Das Vielkeilprofil 9″ kann im Bedarfsfall aus Sicherheitsgründen durch ein über die Sicherungsschraube 10 festlegbares Abdeckprofil 11 verdeckt werden. Aus Fig. 3 ist ersichtlich, daß auf die Radnabenverlängerung 9 ein Zwillingsrad 1 über dessen topfartige Radnabe 1′ aufgeschoben und über die Schraube 10 lagegesichert werden kann. Dabei weist die Nabe 1′ ein inneres Vielkeilprofil auf, das mit dem Profil 9″ der Radnabenverlängerung korrespondiert. Fig. 4 zeigt die Befestigung einer paddelartigen Anfahrhilfe 2 über deren Nabe 2′ auf der Verlängerung 9. Auch die Nabe 2′ ist innen als Vielkeilprofil ausgebildet. Die Mitnehmer 3 der Anfahrhilfe 2 sind in den Führungshülsen 4 radial verschieblich und über die Stellschrauben 5 festlegbar gehalten. Aus Fig. 5 schließlich ist die Verbindung einer Seiltrommel 6 über deren Nabe 6′ mit der Radnabenverlängerung 9 zu erkennen. Ebenso wie die Anfahrhilfe 2 ist die Seiltrommel 6 dazu bestimmt, im Morast festgefahrende Fahrzeuge aus eigener Kraft wieder flott zu machen.

## Ansprüche

1. Radnabenverlängerung für die Antriebsachsen von Kraftfahrzeugen, die über einen Flansch mit der Bremstrommel eines Fahrzeuges verbunden und mit einer paddelartigen Anfahrhilfe verbindbar ist, **dadurch gekennzeichnet,** daß die Verlängerung (9) an ihrem freien Ende als Vielkeilprofil (9″) ausgebildet ist, auf das wechselweise und drehfest die mit einem korrespondierenden Innen-Vielkeilprofil ausgestatteten topfartig ausgebildeten Naben (1′. 2′, 6′) eines Zwillingsrades (1), einer Seiltrommel (6) oder der Anfahrhilfe (2) aufsteckbar sind.

2. Radnabenverlängerung nach Anspruch 1, **dadurch gekennzeichnet,** daß die Radnabenverlängerung (9) über deren Flansch (9′) direkt an der Bremstrommel (8) anliegt, wobei der Flansch (9′) durch die Radschrauben zwischen Bremstrommel (8) und Felge (7′) verspannbar ist.

3. Radnabenverlängerung nach Anspruch 1 und 2, **dadurch gekennzeichnet,** daß die Naben (1′, 2′, 6′) von Zwillingsrad (1), Seiltrommel (6) und Anfahrhilfe (2) in axialer Richtung über eine in das freie Stirnende der Verlängerung (9) eingreifende Sicherungsschraube (10) festlegbar sind.

4. Radnabenverlängerung nach den Ansprüchen 1 bis 3, **dadurch gekennzeichnet,** daß das Vielkeilprofil (9″) der Verlängerung (9) durch ein topfartiges Profil (11) mit Sicherung durch eine in das freie Stirnende der Verlängerung (9) eingreifende Sicherungsschraube (10) abdeckbar ist.ist.

Fig.1

Fig.2

*Fig. 3*

*Fig. 4*

*Fig. 5*

**Europäisches Patentamt**

**EUROPÄISCHER RECHERCHENBERICHT**

Nummer der Anmeldung

EP 90 10 3875

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4007968 (SOLIS)<br>* Spalte 4, Zeile 61 - Spalte 5, Zeile 37; Figuren 8, 9 * | 1, 3 | B60B15/26<br>B60B11/02<br>B66D1/00 |
| Y | US-A-3707308 (SMITH)<br>* Spalte 1, Zeile 46 - Spalte 3, Zeile 9; Figuren 1-5 * | 1, 3, 4 | |
| Y | US-A-4778126 (SPANN)<br>* Spalte 2, Zeilen 10 - 65 *<br>* Spalte 3, Zeile 60 - Spalte 4, Zeile 2; Figuren 2-4, 6, 9, 10 * | 1, 3, 4 | |
| A | US-A-1553123 (WINSOR)<br>* Seite 1, Zeilen 49 - 84; Figuren 2, 3 * | 1 | |
| A | GB-A-282307 (BADEN STEEL & WINCH)<br>* Seite 1, Zeile 74 - Seite 2, Zeile 42; Figuren 2-4 * | 1 | |

**RECHERCHIERTE SACHGEBIETE (Int. Cl.5)**

B60B
B60C
B66D

Der vorliegende Recherchenbericht wurde für alle Patentansprüche erstellt

| Recherchenort | Abschlußdatum der Recherche | Prüfer |
|---|---|---|
| DEN HAAG | 13 JULI 1990 | AYITER I. |